# EUROPEAN PATENT APPLICATION

(11) **EP 4 390 852 A1**
(43) Date of publication of application: **26.06.2024**
(21) Application number: 22866097.3
(22) Date of filing: 21.04.2022
(51) Int. Cl.: G06T 15/00

(54) **SCENE RENDERING METHOD AND APPARATUS, DEVICE AND SYSTEM**

(30) Priority: 10.09.2021 CN 202111060254; 07.01.2022 CN 202210017329
(71) Applicant: Huawei Cloud Computing Technologies Co., Ltd., Guiyang, Guizhou 550025 (CN)
(72) Inventor: CHEN, Pu, Guiyang, Guizhou 550025 (CN)
(74) Representative: Gill Jennings & Every LLP
(86) International application number: PCT/CN2022/088042
(87) International publication number: WO 2023/035619

(57) **Abstract**

This application relates to the data processing field, and in particular, to a scene rendering method, an apparatus, a device, and a system. The method includes: obtaining a first request sent by a first device, where the first request indicates to render a first scene of an application; determining, from a plurality of rendering hosts, a first rendering host used to render the first scene, where the determined first rendering host is configured to provide a rendering result of the first scene to the first device; obtaining a scene switching notification of the application, where the scene switching notification indicates to render a second scene of the application; and determining, from the plurality of rendering hosts, a second rendering host used to render the second scene, where the determined second rendering host is configured to provide a rendering result of the second scene to the first device. This method can reduce a delay caused by scene switching and reduce remote rendering costs.

## Description

This application claims priority to Chinese Patent Application No. 202111060254.9, filed with the China National Intellectual Property Administration on September 10, 2021 and entitled "MULTI-SCENE CLOUD RENDERING SYSTEM", and to Chinese Patent Application No. 202210017329.3, filed with the China National Intellectual Property Administration on January 7, 2022 and entitled "SCENE RENDERING METHOD, APPARATUS, DEVICE, AND SYSTEM", which are incorporated herein by reference in their entireties.

### TECHNICAL FIELD

This application relates to the data processing field, and in particular, to a scene rendering method, an apparatus, a device, and a system.

### BACKGROUND

Real-time rendering of a three-dimensional (three-dimensional, 3D) scene has a high requirement on performance of a computing device. Usually, a lightweight terminal device on a user side, for example, a mobile phone or a tablet computer, cannot meet this requirement. To enable a user to experience a 3D scene by using the lightweight terminal device, a current practice is to use a cloud rendering solution, that is, deploy a 3D application to a remote device with more powerful performance. The remote device runs the 3D application to render the 3D scene, and sends a rendering result to the terminal device, and the terminal device displays the rendering result.

With popularization and development of the 3D application, the cloud rendering solution has increasingly high requirements on a cloud computing capability, and this increases cloud rendering costs.

### SUMMARY

Embodiments of this application provide a scene rendering method, an apparatus, a device, and a system, to reduce a delay caused by scene switching and reduce remote rendering costs.

According to a first aspect, a scene rendering method is provided, and the method includes: obtaining a first request sent by a first device, where the first request indicates to render a first scene of an application; determining, from a plurality of rendering hosts, a first rendering host used to render the first scene, where the determined first rendering host is configured to provide a rendering result of the first scene to the first device; obtaining a scene switching notification of the application, where the scene switching notification indicates to render a second scene of the application; and determining, from the plurality of rendering hosts, a second rendering host used to render the second scene, where the determined second rendering host is configured to provide a rendering result of the second scene to the first device.

If different scenes of an application are rendered by a same rendering host, during scene switching, the rendering host needs to reload, after rendering of a previous scene ends, a program and data that are used to render a scene obtained after switching, and consequently a delay is caused. In the scene rendering method provided in this application, different rendering hosts may be used to render different scenes of an application, and a program and data of a scene obtained after switching may be loaded without waiting for rendering of a previous scene to end, thereby reducing a delay caused by scene switching.

In addition, if different scenes of an application are rendered by a same rendering host, a computing resource needs to be configured for the rendering host based on a scene with a highest complexity degree. However, the rendering host does not always render the scene with the highest complexity degree, or in other words, the rendering host does not render the scene with the highest complexity degree in most time. As a result, the computing resource configured by the rendering host cannot be fully used, and a waste of computing resources is generated. In the scene rendering method provided in this application, different scenes of an application may be rendered by different rendering hosts. When rendering of a scene is completed, a corresponding host may release a computing resource, or render a scene for another application or device, thereby reducing a waste of computing resources, appropriately using computing resources, and reducing costs of remote rendering.

In addition, a rendering host may be selected or a computing resource may be allocated to the rendering host based on a granularity of a scene, and each rendering host does not need to have a capability of rendering a scene with a highest complexity degree, or a computing resource does not need to be configured for each rendering host based on the scene with the highest complexity degree. For example, a rendering host with a high computing capability is used to render a scene with a high complexity degree, and a rendering host with a low computing capability is used to render a scene with a low complexity degree. Alternatively, a large quantity of computing resources may be allocated to a rendering host responsible for rendering a scene with a high complexity degree, and a small quantity of computing resources may be allocated to a rendering host responsible for rendering a scene with a low complexity degree. In this way, a performance requirement on the rendering host can be reduced.

In a possible implementation, the method includes: in a process in which the first rendering host renders the first scene, loading, on the second rendering host, a program and data that are required for rendering the second scene.

That is, in this implementation, in a process of rendering a previous scene, a rendering host that renders a next scene may load a program and data that are required for the next scene, so that after obtaining the scene switching notification, the rendering host may immediately start to render the next scene, thereby reducing a scene switching delay and improving user experience.

In a possible implementation, the method includes: configuring a gateway, where the gateway is configured to: receive, in a local area network, the rendering result of the first scene by the first rendering host, and send the rendering result of the first scene to the first device in an external network.

That is, in this implementation, the rendering host may be isolated from the device in the external network, to avoid a security risk caused by direct access of the device in the external network to the rendering host, thereby improving network security of the rendering host, and avoiding or reducing a network attack on the rendering host.

In a possible implementation, the method further includes: connecting the first device to the first rendering host, so that the first rendering host sends the rendering result of the first scene to the first device.

In other words, in this implementation, there is a connection between the first device and the first rendering host, so that the rendering host can send the rendering result to the first device as soon as possible, thereby reducing a delay of the rendering result in a data transmission process and improving user experience.

In a possible implementation, the scene switching notification is generated when the first rendering host receives a scene switching operation instruction from the first device, and the scene switching operation instruction instructs to render the second scene of the application.

In other words, in this implementation, when triggering scene switching, the first device may directly send the scene switching operation instruction to the rendering host that currently maintains communication with the first device, and the rendering host generates the scene switching notification, so that the scene switching notification can be generated as soon as possible, thereby reducing a delay caused by scene switching and improving user experience.

In a possible implementation, the method further includes: obtaining a second request sent by a second device, where the second request indicates to render the first scene of the application; and indicating the first rendering host to provide the rendering result of the first scene to the second device.

In other words, in this implementation, the rendering host may provide a rendering result of a same scene for different devices, so that the same scene does not need to be repeatedly rendered for different devices, thereby improving utilization of the rendering result of the scene, and saving computing resources.

In a possible implementation, the method further includes: adjusting, based on load for rendering the first scene, a resource used by the first rendering host to render the first scene.

In other words, in this implementation, a resource used by the rendering host to render a scene is dynamically adjusted based on a load status for rendering the scene, so that computing resources can be saved while a scene rendering requirement is met.

According to a second aspect, a management apparatus is provided, where the management apparatus includes: an obtaining unit, configured to obtain a first request sent by a first device, where the first request indicates to render a first scene of an application; and a determining unit, configured to determine, from a plurality of rendering hosts, a first rendering host used to render the first scene, where the determined first rendering host is configured to provide a rendering result of the first scene to the first device. The obtaining unit is further configured to obtain a scene switching notification of the application, where the scene switching notification indicates to render a second scene of the application; and the determining unit is further configured to determine, from the plurality of rendering hosts, a second rendering host used to render the second scene, where the determined second rendering host is configured to provide a rendering result of the second scene to the first device.

In a possible implementation, the management apparatus further includes: a loading unit, configured to: in a process in which the first rendering host renders the first scene, load, on the second rendering host, a program and data that are required for rendering the second scene.

In a possible implementation, the management apparatus further includes: a configuration unit, configured to configure a gateway, where the gateway is configured to: receive, in a local area network, the rendering result of the first scene by the first rendering host, and send the rendering result of the first scene to the first device in an external network.

In a possible implementation, the management apparatus further includes: a connection unit, configured to connect the first device to the first rendering host, so that the first rendering host sends the rendering result of the first scene to the first device.

In a possible implementation, the scene switching notification is generated when the first rendering host receives a scene switching operation instruction from the first device, and the scene switching operation instruction instructs to render the second scene of the application.

In a possible implementation, the management apparatus further includes an indication unit. The obtaining unit is further configured to obtain a second request sent by a second device, where the second request indicates to render the first scene of the application; and the indication unit is configured to indicate the first rendering host to provide the rendering result of the first scene to the second device.

In a possible implementation, the management apparatus further includes an adjustment unit, configured to adjust, based on load for rendering the first scene, a resource used by the first rendering host to render the first scene.

It may be understood that the management apparatus provided in the second aspect is configured to implement the method provided in the first aspect. For beneficial effects of the management apparatus, refer to beneficial effects of the method provided in the first aspect. Details are not described herein again.

According to a third aspect, a remote scene rendering system is provided, where the system includes a management device and a plurality of rendering hosts, and the management device is configured to: obtain a first request sent by a first device, where the first request indicates to render a first scene of an application; determine, from the plurality of rendering hosts, a first rendering host used to render the first scene, where the determined first rendering host is configured to provide a rendering result of the first scene to the first device; obtain a scene switching notification of the application, where the scene switching notification indicates to render a second scene of the application; and determine, from the plurality of rendering hosts, a second rendering host used to render the second scene, where the determined second rendering host is configured to provide a rendering result of the second scene to the first device. In a possible implementation, the management apparatus is further configured to: in a process in which the first rendering host renders the first scene, load, on the second rendering host, a program and data that are required for rendering the second scene.

In a possible implementation, the management apparatus is further configured to configure a gateway, where the gateway is configured to: receive, in a local area network, the rendering result of the first scene by the first rendering host, and send the rendering result of the first scene to the first device in an external network.

In a possible implementation, the management apparatus is further configured to connect the first device to the first rendering host, so that the first rendering host sends the rendering result of the first scene to the first device.

In a possible implementation, the scene switching notification is generated when the first rendering host receives a scene switching operation instruction from the first device, and the scene switching operation instruction instructs to render the second scene of the application.

In a possible implementation, the management apparatus is further configured to: obtain a second request sent by a second device, where the second request indicates to render the first scene of the application; and indicate the first rendering host to provide the rendering result of the first scene to the second device.

In a possible implementation, the management apparatus is further configured to adjust, based on load for rendering the first scene, a resource used by the first rendering host to render the first scene.

It may be understood that the remote scene rendering system provided in the third aspect is configured to implement the method provided in the first aspect. For beneficial effects of the system, refer to beneficial effects of the method provided in the first aspect. Details are not described herein again.

According to a fourth aspect, an image rendering system is provided, including the system provided in the third aspect and a first device.

According to a fifth aspect, a computer-readable storage medium is provided, including computer program instructions. When the computer program instructions are executed by a computing device cluster, the computing device cluster performs the method provided in the first aspect.

According to a sixth aspect, an embodiment of this application provides a computer program product including instructions. When the instructions are run by a computing device cluster, the computing device cluster is enabled to perform the method provided in the first aspect.

According to a seventh aspect, a management device is provided. The management device includes a memory and a processor configured to execute instructions in the memory, so that the management device performs the method provided in the first aspect.

According to the scene rendering method, the apparatus, the device, and the system provided in this application, a delay caused by scene switching can be reduced, and a waste of computing resources can be reduced, so that the computing resources are appropriately used, costs of remote rendering are reduced, and a requirement for performance of a rendering host can be reduced.

### BRIEF DESCRIPTION OF DRAWINGS

FIG. 1A is a schematic diagram of a scene rendering solution;
FIG. 1B is a schematic diagram of a scene rendering solution;
FIG. 2 is a schematic diagram of a scene rendering solution according to an embodiment of this application;
FIG. 3 is a schematic diagram of a network architecture according to an embodiment of this application;
FIG. 4 is a flowchart of a rendering program deployment solution according to an embodiment of this application;
FIG. 5 is a flowchart of logging in to a remote rendering system by a terminal device according to an embodiment of this application;
FIG. 6 is a flowchart of a scene switching solution according to an embodiment of this application;
FIG. 7A and FIG. 7B are a flowchart of a scene switching solution according to an embodiment of this application;
FIG. 8A and FIG. 8B are a flowchart of a computing resource allocation solution according to an embodiment of this application;
FIG. 9 is a flowchart of a scene rendering method according to an embodiment of this application;
FIG. 10 is a schematic diagram of a structure of a scene rendering apparatus according to an embodiment of this application; and
FIG. 11 is a schematic diagram of a structure of a management device according to an embodiment of this application.

### DESCRIPTION OF EMBODIMENTS

The following describes technical solutions in embodiments of the present invention with reference to accompanying drawings. It is clearly that the described embodiments are merely some rather than all of embodiments of this specification.

In the descriptions of this specification, "an embodiment", "some embodiments", or the like indicates that one or more embodiments of this specification include a specific feature, structure, or characteristic described with reference to the embodiments. Therefore, statements such as "in an embodiment", "in some embodiments", "in some other embodiments", and "in other embodiments" that appear at different places in this specification do not necessarily mean referring to a same embodiment. Instead, the statements mean "one or more but not all of embodiments", unless otherwise specifically emphasized in another manner.

In the descriptions of this specification, "/" means "or" unless otherwise specified. For example, A/B may represent A or B. In this specification, "and/or" describes only an association relationship between associated objects and represents that three relationships may exist. For example, A and/or B may represent the following three cases: Only A exists, both A and B exist, and only B exists. In addition, in the descriptions in embodiments of this specification, "a plurality of" means two or more than two.

In the descriptions of this specification, the terms "first" and "second" are merely intended for description, and shall not be understood as an indication or implication of relative importance or implicit indication of a quantity of indicated technical features. Therefore, a feature limited by "first" or "second" may explicitly or implicitly include one or more features. The terms "include", "contain", "have", and their variants all mean "include but are not limited to", unless otherwise specifically emphasized in another manner.

3D applications such as a 3 dimension (3 dimension, 3D) game and a virtual reality (virtual reality, VR) application require real-time rendering of a 3D scenes. The 3D scene may be three-dimensional space including one or more models. Rendering the 3D scene may be a process in which a computing apparatus runs a 3D application, drives scene data, and renders the 3D scene to obtain a rendering result. The rendering result may be an image that is obtained through drawing and rendering and that is used to display the 3D scene. The scene data is data used to describe the 3D scene, and may include graphic data, light source data, virtual camera data, and the like of the model in the three-dimensional space. The graphic data of the model may include data such as a location and an orientation of the model in the three-dimensional space, and a vertex, a material, and a texture that form the model. The light source data may include data such as a location and a type of a light source. The virtual camera data may include data such as a location and an orientation of a virtual camera.

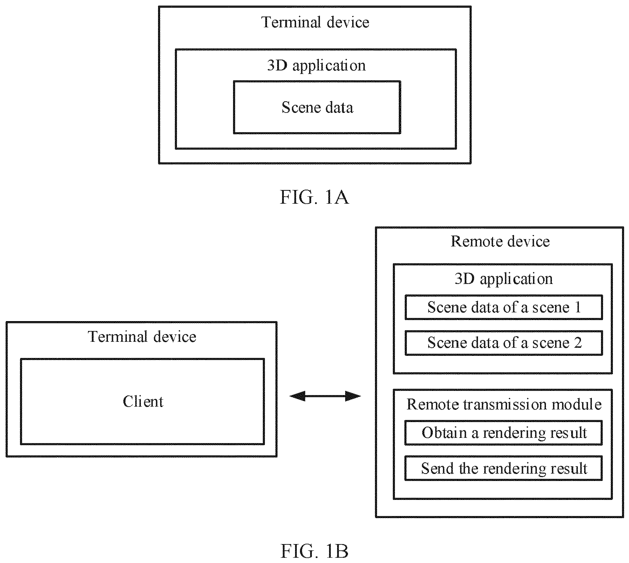

A rendering solution for a 3D scene is a local rendering solution. Refer to FIG. 1A. A terminal device may run a 3D application, drive scene data, and render a 3D scene. Due to limited computing resources of the terminal device, it is difficult to render a complex 3D scene.

A solution is a cloud rendering solution. Refer to FIG. 1B. In the cloud rendering solution, a remote device renders a 3D scene by running a 3D application, to obtain a rendering result, and sends the rendering result to a terminal device. The terminal device displays the rendering result by running a client of the 3D application. In this way, a user can experience visual experience brought by the 3D application when the terminal device is not required to have a strong graphics rendering capability.

However, in this solution, each time a terminal device requests the remote device to render a 3D scene, the remote device starts the 3D application, to render the 3D scene for the terminal device. Usually, a 3D application may include a plurality of 3D scenes. For example, for a 3D game application, different rooms are different 3D scenes. The user may need to switch between different 3D scenes. Therefore, the remote device needs to render different 3D scenes. Refer to FIG. 1B. When 3D scene switching is performed, the remote device needs to load scene data of a 3D scene obtained after switching. This loading process takes time, and the user has to wait for a period of time, resulting in poor user experience.

In addition, when a plurality of terminal devices simultaneously request the remote device to render a 3D scene, the remote device simultaneously runs a plurality of 3D applications, and renders the 3D scene for the plurality of terminal devices. In this way, the remote device needs to prepare computing resources for the plurality of 3D applications, and this increases a computing resource requirement for the remote device.

In addition, a same 3D application may include a plurality of 3D scenes with different complexity degrees. For example, as shown in FIG. 1B, the 3D application may include a scene 1 and a scene 2, and the scene 1 may be rendered by using scene data of the scene 1, and the scene 2 may be rendered by using scene data of the scene 2. A 3D scene with a high complexity degree requires more computing resources, and the remote device needs to prepare computing resources for the 3D application based on a 3D scene that requires the most computing resources in the 3D application. However, during running of the 3D application, the 3D scene that requires the most computing resources is not always rendered, and rendering of another 3D scene may occupy most of the time. Consequently, in most of the time, the computing resources allocated to the 3D application cannot be fully used, causing a waste of the computing resources.

A complexity degree of a scene may alternatively be understood as a difficulty degree of rendering the scene. The complexity degree of the scene is related to a quantity of models in the scene, texture of the model, a material of the model, and the like. For example, if there are more models in the scene and textures and materials of the models are less easy to be rendered, the scene is more complex.

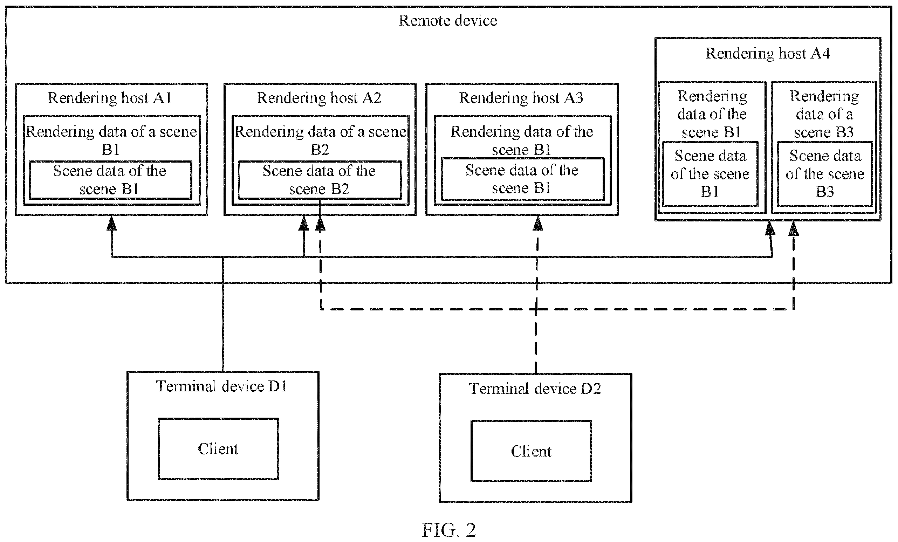

An embodiment of this application provides a scene rendering solution, and the solution may be applied to a remote rendering system including a plurality of rendering hosts. In this solution, when scene rendering is performed, different rendering hosts may be used to render different scenes of a same application. For example, as shown in FIG. 2, a rendering host A1 may be used to render a scene B 1 of an application B, and a rendering host A2 may be used to render a scene B2 of the application B.

Therefore, computing resource allocation may be performed based on a scene granularity. For example, more computing resources may be allocated to a rendering host responsible for rendering a scene with a high complexity degree, and fewer computing resources may be allocated to a rendering host responsible for rendering a scene with a low complexity degree; or a rendering host with more computing resources is used to render a scene with a high complexity degree, and a rendering host with fewer computing resources is used to render a scene with a low complexity degree. In this way, a waste of resources can be reduced.

In addition, because different scenes may be rendered by different rendering hosts, when a scene needs to be switched, a host may be switched to implement scene switching, and scene data of a scene obtained after switching does not need to be reloaded, thereby reducing user waiting. Refer to FIG. 2. For example, after receiving a scene switching operation sent by a user, a terminal device may request the remote rendering system to render the scene obtained after switching. Switching from the scene B1 to the scene B2 is used as an example. It may be set that the rendering host A1 renders the scene B1 for the terminal device. After receiving information that is sent by the terminal device and that is used to request to render the scene B2, the remote rendering system may indicate the rendering host A2 to render the scene B2 for the terminal device. The remote rendering system may establish a connection between the terminal device and the rendering host A2, so that the rendering host A2 sends a rendering result to the terminal device. In this way, a time for loading scene data can be reduced, thereby reducing user waiting.

The terminal device may alternatively be referred to as a user-side device, a local device, or a device for short. In some embodiments, the terminal device may be implemented as a mobile phone, a tablet computer, a personal computer (personal computer, PC), an intelligent wearable device, a smart television, an in-vehicle terminal, or the like. In some embodiments, the terminal device may be deployed as a terminal apparatus, and the terminal apparatus may perform a function of the terminal device that is to be described below. The terminal device may provide a hardware environment for running of the terminal apparatus.

In some embodiments, the remote rendering system may be a cloud rendering system, and a rendering host included in the remote rendering system may be a cloud computing apparatus or device.

In this embodiment of this application, the rendering host may be an apparatus or a device that executes a rendering program, drives scene data of a scene, and performs scene rendering. In some embodiments, the rendering host may be a physical machine, for example, may be an independent computing device, or may be a cluster including one or more computing devices. In some embodiments, the rendering host may be a virtual device, for example, may be a virtual machine (virtual machine, VM), or may be a container (container).

In some embodiments, the rendering host may have graphics rendering-related hardware, or obtain support of graphics rendering-related hardware, to have or obtain a graphics rendering capability. The graphics rendering hardware may be hardware that has a graphics rendering capability, such as a graphics processing unit (graphics processing unit, GPU) or an artificial intelligence (artificial intelligence, Al) chip. It should be noted that the foregoing description is merely an example of the rendering host, and does not constitute a limitation. A specific form or an implementation of the rendering host is not limited in this embodiment of this application.

It should be noted that the scene rendering method provided in this embodiment of this application may be used to render a 3D scene, or may be used to render a 2D scene. In addition, in the following description, unless otherwise specified, the mentioned scene may be a 3D scene, or may be a 2D scene.

The rendering host can load rendering data of a scene when or before rendering the scene. The rendering data of the scene may include scene data of the scene, or may include a rendering program used to drive the scene data to render the scene. In other words, the rendering program of the scene is a program required for rendering the scene, and the scene data of the scene is data required for rendering the scene. In addition, a specific rendering program of the scene may be referred to as a rendering program instance of the scene. That the rendering host may load the rendering program of the scene may specifically be that the rendering host may load one or more rendering program instances of the scene. When the rendering program or the rendering program instance runs in the rendering host, the graphics rendering capability or a computing resource of the rendering host may be invoked, and the scene data is loaded and driven to complete rendering of the scene. For example, the rendering program instance may load and parse a fbx file, and then invoke an open graphics library (open graphics library, openGL) program interface of the rendering host to complete image rendering. The image is an image used to present a scene, that is, a rendering result.

In some embodiments, a same application may include a plurality of scenes, and a unique identity document (identity document, ID) may be configured for each scene. For example, an ID of the scene B1 is 092387459aa. Rendering programs of different scenes in the plurality of scenes may be different or may be the same. For example, for different scenes with low complexity degrees, for example, different browsing scenes in a game application, rendering programs of the different scenes may be the same. In an example, for a browsing scene, a rendering program of the browsing scene may be a Viewer component provided by a WebGL browser rendering engine babylonjs. For example, for different scenes with high complexity degrees, rendering programs of the different scenes may be different. Especially, for a scene with frequent interactions, more program logic is required to process interaction logic of the scene. Different interactive scenes may require different interaction logic, and therefore, different program logic may be required. In an example, for an interactive scene of a game application, program logic of a rendering program may be written by using a C++ language, a C# language, or a visual blueprint technology, or rendering of a special effect in the scene may be completed by using shader programming in a scene rendering process.

In addition, this embodiment of this application proposes that different scenes may be rendered by different rendering hosts, but a quantity of scenes rendered by one rendering host is not limited, and a quantity of rendering hosts rendering a same scene is not limited.

In some embodiments, one rendering host may be used to render one or more scenes. For example, as shown in FIG. 2, a rendering host A4 may be used to render the scene B1 and a scene B3.

In some embodiments, a same scene may alternatively be rendered by a plurality of rendering hosts. For example, the scene B1 is used as an example, and the rendering host A1 may render the scene B1 for one or more terminal devices. When more terminal devices request the remote rendering system to render the scene B1, a rendering capability of the rendering host A1 is limited, and it may be difficult for the rendering host A1 to render the scene B1 for more terminal devices. To cope with this case, another rendering host may be set, for example, a rendering host A3 used to render the scene B1. The rendering host A1 and the rendering host A3 may render the scene B1 for different terminal devices separately, and send respective rendering results to corresponding terminal devices.

For example, the rendering host A1 and the rendering host A3 may collaboratively run a rendering program of the scene B1, to complete rendering of the scene B1. Then, a rendering result of the collaborative rendering is sent to a terminal device D1 and a terminal device D2. For example, the rendering host A1 and the rendering host A3 may separately run the rendering program of the scene B1, and separately complete rendering of the scene B1. The rendering host A1 may send a rendering result to the terminal device D1, and the rendering host A3 may send a rendering result to the terminal device D2.

The foregoing examples describe a setting and deployment manner of a rendering program of a scene, and do not limit the setting and deployment manner of the rendering program of the scene. A developer can flexibly use different development manners to build and deploy a rendering program of a scene with the scene as a granularity. In some embodiments, a rendering program of a scene may be constructed based on a cloud native (cloud native) technology, so that advantages of a cloud platform of being elastic and distributed can be fully utilized to implement rapid deployment of the rendering program of the scene and on-demand scaling of computing resources of a rendering host, thereby ensuring user experience and saving computing resources.

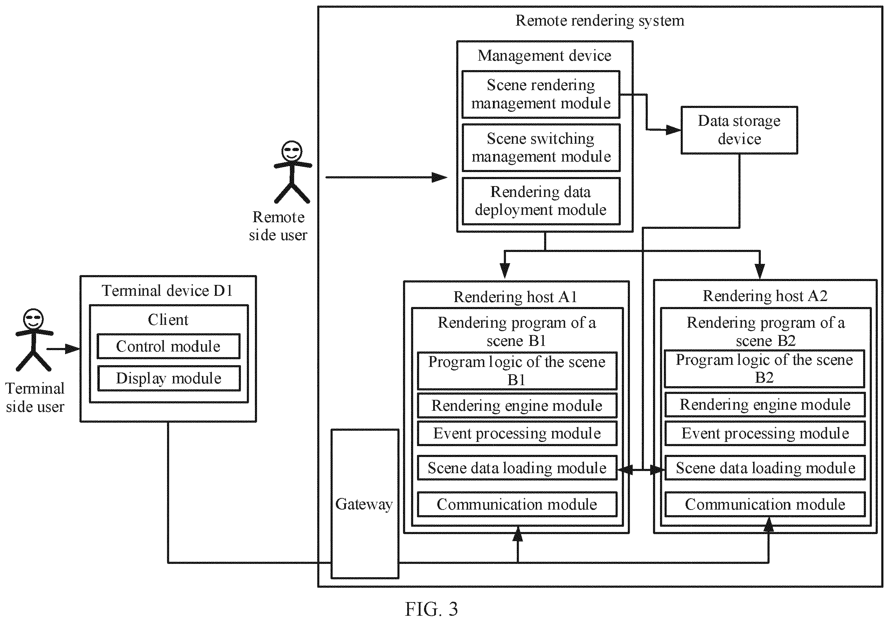

FIG. 3 shows a network architecture applicable to an embodiment of this application. Refer to FIG. 3. The network architecture includes a remote rendering system and a terminal device. The remote rendering system may include a plurality of rendering hosts. For the rendering host, refer to the foregoing descriptions of the embodiment shown in FIG. 2. The remote rendering system may include a management device, configured to manage components in the remote rendering system, for example, the rendering host. Specifically, the management device may manage deployment and update of rendering data of a scene, or may apply for a computing resource for the rendering host when the rendering host runs a rendering program, or may allocate a rendering host to the terminal device when the terminal device accesses the remote rendering system, or may select a rendering host used to render a scene, or may select a rendering host during scene switching to render a scene obtained after switching, and the like. These are not listed one by one herein.

The management device may receive a management operation of a remote side user. For example, the remote side user may combine rendering data of a plurality of scenes into rendering data of an application by using the management device, and release or update the rendering data of the application in the remote rendering system by using the management device. The remote side user may further publish or update rendering data of one or more scenes in the remote rendering system by using the management device.

A function of the management device is further specifically described below with reference to the scene rendering solution. Details are not described herein again.

In some embodiments, the management device may be a physical machine, for example, may be an independent computing device, or may be a cluster including one or more computing devices. In some embodiments, a management apparatus may be deployed in the management device, and a function of the management device may be specifically implemented by the management apparatus. For example, the management apparatus may be a virtual device deployed on the management device, for example, a virtual machine or a container.

The remote rendering system may further include a data storage device, and the data storage device may be configured to store rendering data of a scene. Specifically, the data storage device may be configured to store a rendering program of the scene, and may be configured to store scene data of the scene. For example, as described above, for different scenes with low complexity degrees, rendering programs of the different scenes are the same. Therefore, for different scenes with low complexity degrees, it is not necessary to store a rendering program for each scene separately, and only one rendering program may be stored. The rendering program may be repeatedly used, for example, may be loaded or invoked by different rendering hosts.

The rendering host may load or invoke a rendering program of a scene from the data storage device. For example, the rendering host A1 may load or invoke the rendering program of the scene B1 from the data storage device.

The following uses the rendering program of the scene B1 as an example to describe a function module of the rendering program.

Refer to FIG. 3. The rendering program of the scene B1 may include program logic of the scene B1. The program logic of the scene B1 may be the same as or different from program logic of another scene. For example, when the scene B1 is a scene with a low complexity degree, the program logic of the scene B1 may be the same as program logic of another scene with a low complexity degree. When the scene B1 is a scene with a high complexity degree, the program logic of the scene B1 may be different from program logic of another scene.

The rendering program of the scene B1 may include a rendering engine module. In an example, the rendering engine module may be specifically unity. When rendering a scene, the rendering engine module may invoke a graphics library interface (for example, an openGL program interface) of the rendering host to complete image rendering.

The render program of the scene B1 may further include an event processing module. When the rendering host A1 is connected to the terminal device D1, the event processing module may respond to a user operation instruction from the terminal device D1, for example, a scene switching operation instruction, and generate a scene switching notification according to the scene switching operation instruction, to notify the management device to perform scene switching. Details are described below, and are not described herein again.

The rendering program of the scene B1 may further include a scene data loading module. The scene data loading module may load the scene data of the scene B1 from the data storage device, so that the rendering program may render the scene B1 by using the scene data of the scene B1.

The rendering program of the scene B1 may further include a communication module. The communication module may receive information sent by the terminal device, for example, the scene switching operation instruction from the terminal device. The communication module may further send information to the terminal device, for example, send a rendering result to the terminal device.

In some embodiments, the rendering program of the scene B1 may be implemented as a separate process. In some other embodiments, the rendering program of the scene B1 may be a thread in a process. For example, the rendering program of the scene B1 may be a thread in a process of the application B. In an example, the application B may include a plurality of scenes such as the scene B1, the scene B2, and a scene B3, and a rendering program of each scene may be one or more threads in the process of the application B.

The foregoing example describes the function modules of the rendering program of the scene. The following continues to describe other components in the network architecture.

Still refer to FIG. 3. The remote rendering system may further include a gateway (gateway) configured to isolate the terminal device from the rendering host, so as to improve network security of the rendering host, and avoid or reduce a network attack on the rendering host. Specifically, the remote rendering system may form a local area network, and the gateway, the rendering host, and the management device all belong to the local area network. Therefore, the gateway may receive, in the local area network, a rendering result and other data of the rendering host, and send the rendering result and the other data to a terminal device in an external network. In addition, the gateway may receive data such as a rendering request and the scene switching operation instruction from the terminal device in the external network, and send, in the local area network, the data such as the rendering request and the scene switching operation instruction to the rendering host or the management device in the local area network.

In addition, the terminal device may be connected to the gateway, and the gateway is connected to the rendering host, thereby implementing a brief connection between the terminal device and the rendering host. When the rendering host connected to the terminal device is switched, a connection between the terminal device and the gateway does not need to be disconnected, and the terminal device can be connected to a new rendering host only by connecting the gateway to the new rendering host, thereby improving user experience. Details are specifically described below and not described herein again.

In some embodiments, the terminal device may alternatively be directly connected to the rendering host, to exchange information with the rendering host. Details are described below, and are not described herein again.

Still refer to FIG. 3. The network architecture further includes a terminal device D1. The terminal device D1 may alternatively be referred to as a user-side device or a local device. In some embodiments, the terminal device D1 may be implemented as a terminal device. For example, the terminal device D1 may be implemented as a mobile phone, a tablet computer, a personal computer (personal computer, PC), an intelligent wearable device, a smart television, an in-vehicle terminal, or the like. In some embodiments, the terminal device D1 may be configured with a terminal apparatus. A function of the terminal device D1 may be specifically implemented by the terminal apparatus, where the terminal device D1 may provide a hardware environment for running of the terminal apparatus.

As shown in FIG. 3, a client may be deployed on the terminal device D1. The client may be a client of an application to which a scene rendered by the remote rendering system belongs. The client may alternatively be referred to as a terminal apparatus.

The client may include an operation module configured to receive a user operation instruction made by a terminal side user. In some embodiments, the user operation instruction may be an operation instruction that is directly entered by the terminal side user by using an input device (for example, a keyboard or a mouse) of the terminal device. For example, the terminal side user may click a left mouse button, or press a key A on the keyboard. The user operation instruction may represent a preset meaning. For example, the user operation instruction represents scene switching. For example, if a user operation instruction represents a door opening action, and another scene is displayed after the door is opened, the user operation represents scene switching. The user operation instruction representing scene switching may be referred to as a scene switching operation instruction. For example, a meaning represented by the user operation instruction may be determined by the client on the terminal device, or may be determined by a related component or module (for example, an event processing module) in the remote rendering system.

The foregoing example describes the network architecture to which the scene rendering solution provided in this embodiment of this application may be applied. Next, in different embodiments, an implementation process of the scene rendering solution provided in this embodiment of this application is described.

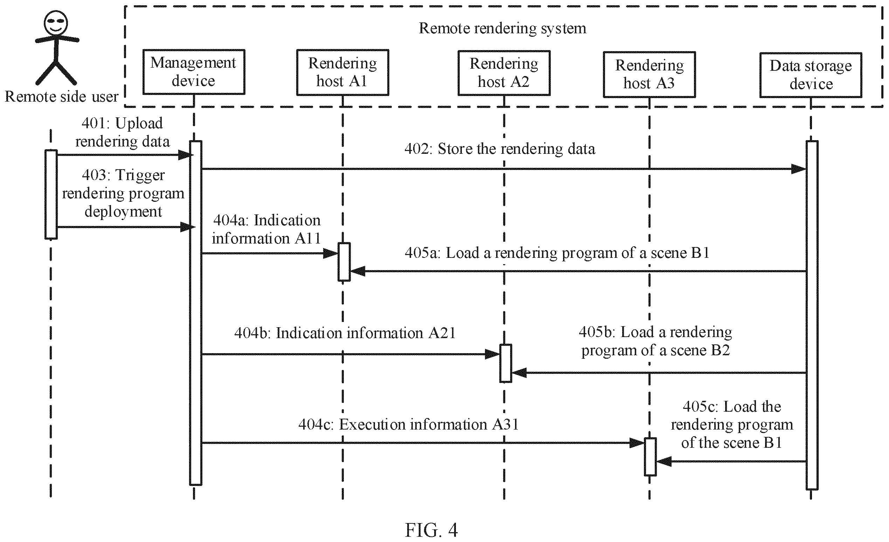

First, with reference to FIG. 4, a rendering program deployment solution of a scene is described.

Refer to FIG. 4. In step 401, a remote side user may upload rendering data by using a management device. As described above, the rendering data may include scene data and a rendering program. For example, the rendering data uploaded in step 401 may be rendering data of scenes of one or more applications. For example, the rendering data uploaded in step 401 may be rendering data of some scenes of an application. For example, the rendering data uploaded in step 401 may be rendering data that is uploaded for the first time and that is of one or more scenes. For example, the rendering data uploaded in step 401 may be updated or upgraded rendering data of one or more scenes.

In the embodiment shown in FIG. 4, it may be set that the rendering data uploaded in step 401 includes rendering data of a scene B1 and rendering data of a scene B2. The scene B1 and the scene B2 may both belong to an application B.

In step 402, the management device may store the rendering data uploaded in step 401 into a data storage device.

In step 403, the remote side user may trigger rendering program deployment. When the rendering data uploaded in step 401 may be the updated or upgraded rendering data of one or more scenes, step 403 may alternatively be understood as triggering update of a rendering program.

In step 403, the remote side user may trigger the management device to deploy the rendering program on a rendering host. For example, as shown in FIG. 4, the management device may send indication information A11 to a rendering host A1 by using step 404a. The indication information A11 indicates the rendering host A1 to deploy a rendering program of the scene B1. The rendering host A1 may perform step 405a in response to the indication information A11, to load the rendering program that is of the scene B1 and that is stored in the data storage device to the rendering host A1. In an example, after receiving the indication information A11, the rendering host A1 may immediately perform step 405a, to deploy the rendering program of the scene B1 on the rendering host A1 before the rendering host A1 is connected to a terminal device. In another example, after receiving the indication information A11, the rendering host A1 may not immediately perform step 405a, but perform step 405a when there is a connection between the rendering host A1 and the terminal device, so that when the rendering host A1 needs to perform an operation of rendering the scene B1, the rendering program of the scene B1 is deployed on the rendering host A1.

For example, as shown in FIG. 4, the management device may send indication information A21 to a rendering host A2 by using step 404b. The indication information A21 indicates the rendering host A2 to deploy the rendering program of the scene B2. The rendering host A2 may perform step 405b in response to the indication information A21, to load the rendering program that is of the scene B2 and that is stored in the data storage device to the rendering host A2. In an example, after receiving the indication information A21, the rendering host A2 may immediately perform step 405b, to deploy the rendering program of the scene B2 on the rendering host A2 before the rendering host A2 is connected to the terminal device. In another example, after receiving the indication information A21, the rendering host A2 may not immediately perform step 405b, but perform step 405b when there is a connection between the rendering host A2 and the terminal device, so that when the rendering host A2 needs to perform an operation of rendering the scene B2, the rendering program of the scene B2 is deployed on the rendering host A2.

For example, as shown in FIG. 4, the management device may send indication information A31 to a rendering host A3 by using step 404c. The indication information A31 indicates the rendering host A3 to deploy the rendering program of the scene B1. The rendering host A3 may perform step 405c in response to the indication information A31, to load the rendering program that is of the scene B1 and that is stored in the data storage device to the rendering host A3. In an example, after receiving the indication information A31, the rendering host A3 may immediately perform step 405c, to deploy the rendering program of the scene B1 on the rendering host A3 before the rendering host A3 is connected to the terminal device. In another example, after receiving the indication information A31, the rendering host A3 may not immediately perform step 405c, but perform step 405c when there is a connection between the rendering host A3 and the terminal device, so that when the rendering host A3 needs to perform an operation of rendering the scene B1, the rendering program of the scene B1 is deployed on the rendering host A3.

In some embodiments, step 405a, step 405b, and step 405c may be performed simultaneously, or may be performed successively. For example, step 405a may be performed first, so that the rendering host A1 may render the scene B1 by using the rendering program of the scene B1. In a process in which the rendering host A1 renders the scene B1 by using the rendering program of the scene B1, step 405b may be performed, that is, the rendering host A2 loads the rendering program of the scene B2.

The foregoing example describes a process of deploying the rendering data. The following describes a process of logging in to a remote rendering system by the terminal device.

In step 501, a terminal device D1 may receive a login operation of a terminal side user, for example, receive an account and a password that are entered by the user. In step 502, the terminal device D1 may send a login request to the remote rendering system in response to the login operation. The login request may include identity information, where the identity information represents a user identity of the terminal side user. The identity information may be used for authentication. After authentication succeeds, in response to the login request, the remote rendering system may allocate a session (session) resource, establish a session, and send a session identifier to the terminal device D1. The terminal device D1 may request, by using the session identifier, a service of the remote rendering system, for example, rendering a scene.

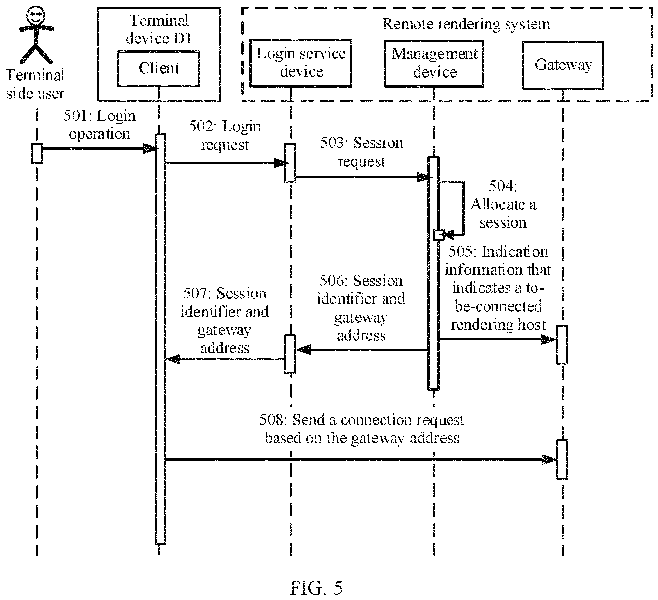

Refer to FIG. 5. In some embodiments, the remote rendering system may include a login service device. The login service device may store a correspondence between identity information and a remote service account, where the remote service account also represents a user identity, and the user identity has permission to request a service of the remote rendering system. The login service device may determine the remote service account based on the identity information in the login request, and send a session request to the management device by using step 503, where the session request includes the remote service account.

The management device may perform step 504 to allocate a session to the terminal device D1, and generate a session identifier (session ID). For example, the session identifier may be a token (token), for example, a token whose length is 256 bits.

The management device may further determine a 1^{st} scene that needs to be rendered after the terminal device D1 logs in to the remote rendering system, and determine a rendering host used to render the scene. In some embodiments, the login request may alternatively be understood as a scene rendering request, and is used to request the remote rendering system to render a scene for the terminal device D1 that sends the login request. The login request may include an identifier of the scene. As described above, the identifier of the scene is used to identify the scene. The identifier of the scene may be sent to the management device by using the login service device. The management device may determine, based on the identifier of the scene, the 1^{st} scene that needs to be rendered after the terminal device D1 logs in to the remote rendering system, and determine a rendering host used to render the 1^{st} scene.

In some embodiments, when the remote rendering system does not have the login service device, the terminal device D1 may directly send the login request to the management device. The management device may allocate a session resource and establish a session based on the login request, and determine the rendering host based on the identifier of the scene in the login request.

In some embodiments, the remote rendering system may further include a gateway. The management device may notify the gateway of a to-be-connected rendering host. The to-be-connected rendering host herein is the rendering host that is determined by the management device and that is used to render the 1^{st} scene. For example, the management device may perform step 505 to send indication information to the gateway, where the indication information indicates the to-be-connected rendering host. For example, the indication information may include a network address (for example, an internet protocol (internet protocol, IP) address) of the to-be-connected rendering host. In another illustrative example, the management device may not notify the gateway of the to-be-connected rendering host by using step 505, but the gateway may query the management device for the to-be-connected rendering host when or after the gateway establishes a connection to the terminal device D1.

For example, the management device may further notify the gateway of a session identifier, to indicate the gateway to subsequently support a session identified by the session identifier. For example, the management device may alternatively not notify the gateway of the session identifier. When the gateway establishes the connection with the terminal device D1, the gateway may query the management device for the session identifier.

For example, as shown in FIG. 5, the management device may send the session identifier and a gateway address to the login service device by using step 506. The login service device may send the session identifier and the gateway address to the terminal device D1 by using step 507. For example, the management device may directly send the session identifier and the gateway address to the terminal device D1. That is, the management device may send the session identifier and the gateway address to the terminal device D1 without using the login service device or when the remote rendering system does not have the login service device.

Still refer to FIG. 5. The terminal device D1 may perform step 508 to send a connection request to the gateway based on the gateway address, so as to establish the connection between the terminal device D1 and the gateway. When or after the terminal device D1 establishes the connection to the gateway, the gateway may establish a connection between the gateway and the to-be-connected rendering host. Therefore, the terminal device D1 may be connected to the rendering host through the gateway, so that the rendering host may send a rendering result to the terminal device D1.

In some embodiments, for a manner in which the gateway may determine the to-be-connected rendering host, refer to the foregoing description. Details are not described herein again.

In some other embodiments, the connection request sent by the terminal device D1 to the gateway may alternatively be understood as a scene rendering request, and is used to request the remote rendering system to render a scene for the terminal device D1. The connection request may include an identifier of the scene. After receiving the connection request, the gateway may send the identifier of the scene to the management device. The management device may determine, based on the identifier of the scene, a scene that the terminal device D1 requests to render. Then, the management device may determine a rendering host used to render the scene that the terminal device D1 requests to render, and use the rendering host as the to-be-connected rendering host. The management device may send information (for example, a network address) of the to-be-connected rendering host to the gateway. The gateway may connect to the rendering host based on the information of the to-be-connected rendering host. Therefore, a connection is established between the terminal device D1 and the rendering host. That is, in this embodiment, before the terminal device D1 sends the connection request to the gateway, the management device does not need to determine the to-be-connected rendering host, but after the gateway receives the connection request, the management device determines the to-be-connected rendering host.

In some embodiments, the connection between the terminal device D1 and the gateway is a session. The terminal device D1 may further send a session identifier to the gateway. When or after receiving the session identifier, the gateway may compare whether the session identifier is consistent with the session identifier received or queried by the gateway from the management device. If the session identifiers are consistent, the gateway supports the session between the gateway and the terminal device D1.

In some embodiments, when the remote rendering system does not have the gateway, the management device may directly send the network address of the determined rendering host used to render the 1^{st} scene to the terminal device D1, and the terminal device D1 may connect to the rendering host based on the network address of the rendering host.

The foregoing example describes a solution in which the terminal device D1 logs in to the remote rendering system. The following describes a scene switching solution by using an example.

The terminal device D1 may perform step 601 to send a connection request to the remote rendering system, to establish a connection between the terminal device D1 and the remote rendering system.

In some embodiments, when the remote rendering system has the gateway, the terminal device D1 may send the connection request to the gateway in step 601, to establish a connection between the terminal device D1 and the gateway. For details, refer to the foregoing descriptions of step 508 in FIG. 5. For example, in step 602, the gateway may query the management device for the to-be-connected rendering host. For example, the management device may alternatively notify the gateway of the to-be-connected rendering host in advance. For details, refer to the foregoing descriptions of the embodiment shown in FIG. 5.

The rendering host A1 may be set as the to-be-connected rendering host. For example, in step 603, the management device may notify the rendering host A1 to prepare to connect to the terminal device D1. In this embodiment of this application, an execution sequence of step 603 and step 602 is not limited. In an example, step 603 may be performed after step 602. In another example, step 603 may be performed before step 602. In still another example, step 603 may be performed when or after the management device determines that the rendering host A1 is the to-be-connected rendering host.

In step 604, the gateway may be connected to the rendering host A1. Because the connection has been established between the gateway and the terminal device D1 (for details, refer to the foregoing descriptions of the embodiment shown in FIG. 5), when the gateway is connected to the rendering host A1, the terminal device D1 also establishes a connection to the rendering host A1.

In some embodiments, when the remote rendering system does not have the gateway, the terminal device D1 may send a connection request to the rendering host A1 based on a gateway address of the rendering host A1, to establish a connection between the terminal device D1 and the rendering host A1.

In step 605, the rendering host A1 may run the rendering program of the scene B1, drive the scene data of the scene B1, and render the scene B1, to obtain a rendering result of the scene B1. Then, in step 606, the rendering host A1 may send the rendering result of the scene B1 to the terminal device D1. When the remote rendering system has the gateway, that is, when the terminal device D1 and the rendering host A1 are connected through the gateway, the rendering result of the scene B1 may be first sent to the gateway, and then the gateway sends the rendering result of the scene B1 to the terminal device D1. When the remote rendering system does not have the gateway, the rendering host A1 may directly send the rendering result of the scene B1 to the terminal device D1.

Before step 605, the rendering host A1 needs to complete loading of the rendering program and the scene data of the scene B1. In an example, the rendering host A1 may load the rendering program of the scene B1 in advance. That is, before the terminal device D1 logs in to the remote rendering system, the rendering host A1 may complete loading of the rendering program of the scene B1. In an example, after completing loading of the rendering program of the scene B1, the rendering host A1 may invoke a scene data loading module in the rendering program to load the scene data of the scene B1 from the data storage device. That is, before the terminal device D1 logs in to the remote rendering system, the rendering host A1 may complete loading of the scene data of the scene B1. In an example, before the terminal device D1 logs in to the remote rendering system, the rendering host A1 may complete loading of the rendering program of the scene B1. Then, when receiving a notification that is sent by the management device and that is of preparing to connect to the terminal device D1, or when the terminal device is connected to the rendering host A1, the rendering host A1 may invoke the scene data loading module to load the scene data of the scene B1 from the data storage device. In an example, when receiving the notification that is sent by the management device and that is of preparing to connect to the terminal device D1, or when the terminal device D1 is connected to the rendering host A1, the rendering host A1 may load the rendering program of the scene B1, and invoke the scene data loading module to load the scene data of the scene B1 from the data storage device. In addition, for a solution in which the rendering host A1 loads the rendering program, refer to the foregoing descriptions of the embodiment shown in FIG. 4.

In a process of operating the terminal device D1, the terminal side user may generate a scene switching operation. The scene switching operation is an operation of entering another scene (the scene B2) from a current scene (the scene B1). For example, the terminal side user may generate an operation of entering a room in a game. The operation may be an operation for a door in the scene B1. The operation may alternatively be that when a focus is on a door in the scene B1, the terminal side user triggers a shortcut key (for example, clicks a left mouse button, or presses a key A on a keyboard). Alternatively, the scene switching operation may be an instruction for directly entering a scene. For example, the terminal device may be a language control device, and the terminal side user may enter a scene by using a voice instruction. A manner or a form of the scene switching operation generated by the terminal side user is not specifically limited in this embodiment of this application.

The terminal device D1 may perform step 607 in response to the scene switching operation generated by the terminal side user, to send a scene switching operation instruction to the remote rendering system. The scene switching operation instruction may be used to request the remote rendering system to render the scene B2, or instruct the remote rendering system to switch from performing an operation of rendering the scene B1 to performing an operation of rendering the scene B2. When the remote rendering system has the gateway, the gateway may receive the scene switching operation instruction sent by the terminal device D1, and then send the scene switching operation instruction to the rendering host A1 by using step 608. When the remote rendering system does not have the gateway, the scene switching operation instruction sent by the terminal device D1 may be directly sent to the rendering host A1.

After receiving the scene switching operation instruction, the rendering host A1 may determine that the scene switching operation instruction instructs to switch from performing the operation of rendering the scene B1 to performing the operation of rendering the scene B2. The rendering host A1 may perform step 609 to send a scene switching notification to the management device, to notify the management device that the terminal device D1 requests to render the scene B2.

The management device may perform step 610 in response to the scene switching notification, to determine that the rendering host A2 is used for rendering the scene B2, and determine that the rendering host A2 is a to-be-connected rendering host. Then, the management device may perform step 611 to notify the rendering host A2 to prepare to connect to the terminal device D1. When the remote rendering system has the gateway, the management device may further perform step 612 to notify the gateway to switch the rendering host. When the gateway is notified to switch the rendering host, information (for example, a network address) of the to-be-connected rendering host (the to-be-connected rendering host in this case is the rendering host A2) may be sent to the gateway. In step 613, the gateway may establish a connection between the gateway and the to-be-connected rendering host based on the information of the to-be-connected rendering host, that is, establish a connection between the gateway and the rendering host A2. Therefore, a connection is established between the terminal device D1 and the rendering host A2.

The rendering host A2 may perform step 614 to run a rendering program of the scene B2, drive scene data of the scene B2, and render the scene B2, to obtain a rendering result of the scene B2. Then, in step 615, the rendering host A2 may send the rendering result of the scene B2 to the terminal device D1. When the remote rendering system has the gateway, that is, when the terminal device D1 and the rendering host A2 are connected through the gateway, the rendering result of the scene B2 may be first sent to the gateway, and then the gateway sends the rendering result of the scene B2 to the terminal device D1. When the remote rendering system does not have the gateway, the rendering host A2 may directly send the rendering result of the scene B2 to the terminal device D1.

Before step 614, the rendering host A2 needs to complete loading of the rendering program and the scene data of the scene B2. In some embodiments, for a specific implementation in which the rendering host A2 loads the rendering program and the scene data of the scene B2, refer to the foregoing descriptions of loading the rendering program and the scene data of the scene B1 by the rendering host A1, or refer to the foregoing descriptions of the embodiment shown in FIG. 4. In some embodiments, in an execution process of step 605, that is, in a process of rendering the scene B1 by the rendering host A1, the rendering host A2 may load the rendering program and the scene data of the scene B2.

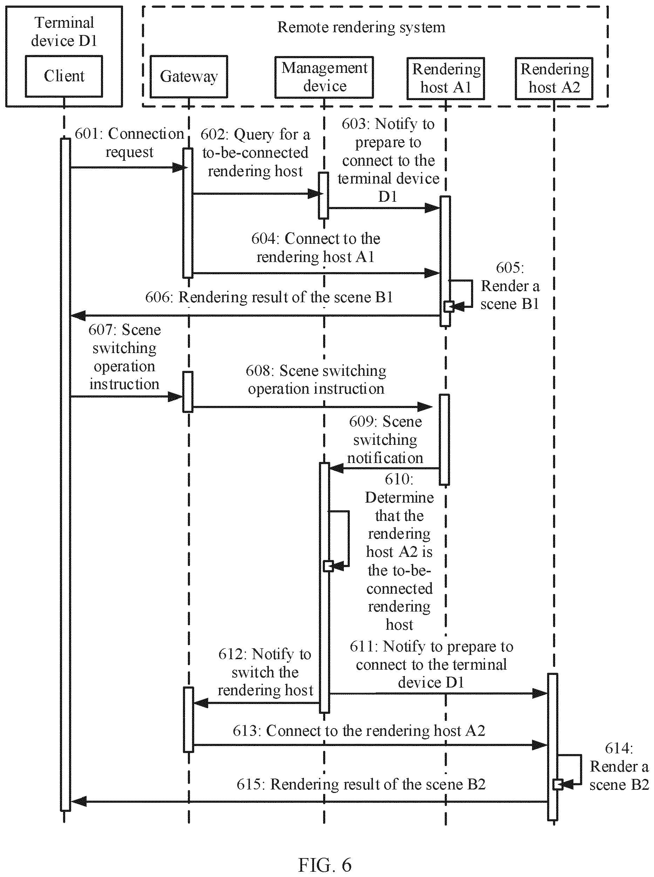

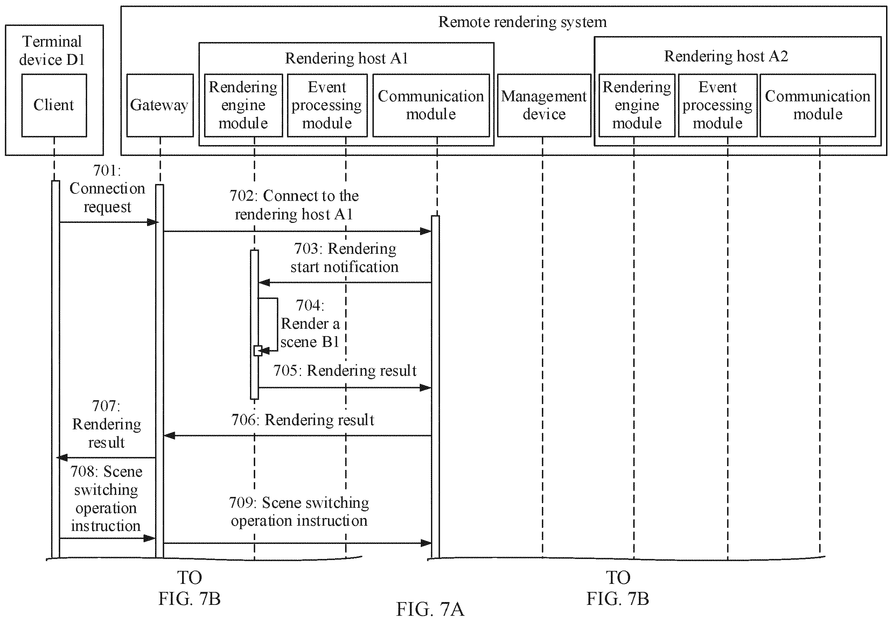

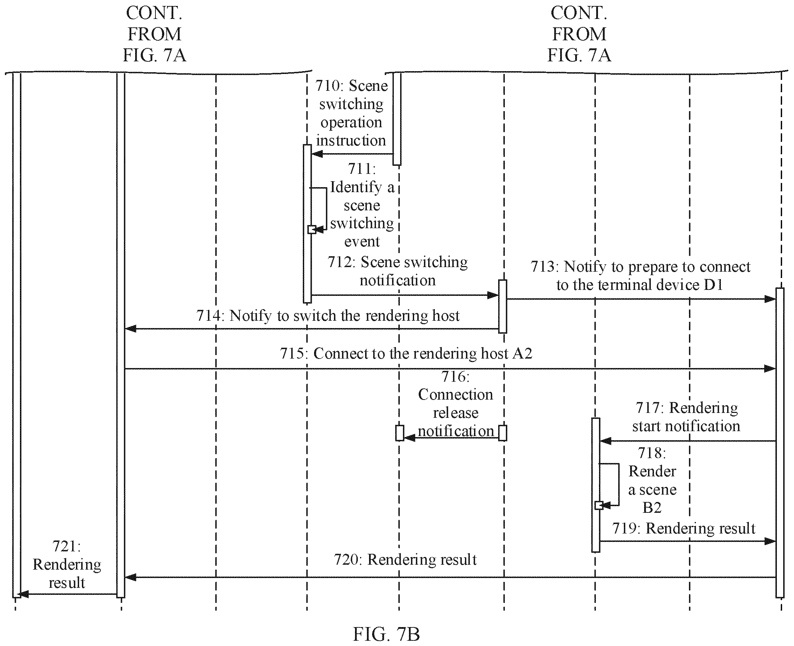

The foregoing describes the scene switching solution by using an example with reference to FIG. 6. Next, with reference to FIG. 7A and FIG. 7B, in a more specific embodiment, the scene switching solution is described by using an example.

In the embodiment shown in FIG. 7A and FIG. 7B, the rendering program of the scene B1 is deployed on the rendering host A1, and the rendering program may include a rendering engine module, an event processing module, and a communication module. The rendering program of the scene B2 is deployed on the rendering host A1, and the rendering program includes a rendering engine module, an event processing module, and a communication module. For details, refer to the foregoing descriptions of the embodiment shown in FIG. 3.

In the following, for ease of description, a rendering engine module, an event processing module, and a communication module that are of a rendering program (namely, the rendering program of the scene B1) deployed on the rendering host A1 may be successively referred to as a rendering engine module, an event processing module, and a communication module of the rendering host A1. A rendering engine module, an event processing module, and a communication module that are of a rendering program (namely, the rendering program of the scene B2) deployed on the rendering host A2 may be successively referred to as a rendering engine module, an event processing module, and a communication module of the rendering host A2.

The terminal device D1 performs step 701 to send a connection request to the remote rendering system. The gateway in the remote rendering system may receive the connection request sent by the terminal device D1, and connect to the rendering host A1 by using step 702 in response to the connection request. The rendering host A1 is connected to the gateway through the communication module of the rendering host A1. Therefore, an indirect connection is established between the terminal device D1 and the rendering host A1.

The communication module of the rendering host A1 may perform step 703 to send a rendering start notification to the rendering engine module of the rendering host A1, to indicate the rendering engine module to start rendering the scene B1. The rendering engine module of the rendering host A1 may perform step 704 in response to the rendering start notification to render the scene B1, and send a rendering result of the scene B1 to the communication module of the rendering host A1 by using step 705. The communication module of the rendering host A1 may send the rendering result to the terminal device D1 by using step 706 and step 707, so that the terminal device D1 displays the rendering result.

The terminal device D1 may perform step 708 to send a scene switching operation instruction to the remote rendering system. The gateway in the remote rendering system may receive the scene switching operation instruction, and send the scene switching operation instruction to the communication module of the rendering host A1 by using step 709. The communication module of the rendering host A1 may send the scene switching operation instruction to the event processing module of the rendering host A1 by using step 710. The event processing module may perform step 711 to identify a scene switching event according to the scene switching operation instruction, that is, identify that an event of switching from the scene B1 to the scene B2 occurs. Then, the event processing module of the rendering host A1 may perform step 712 to send a scene switching notification to the management device. In another embodiment, step 711 and step 712 may alternatively be performed by the communication module of the rendering host A1.

The management device may determine, in response to the scene switching notification, that the rendering host A2 is used to render the scene B2, and notify, by using step 713, the communication module of the rendering host A2 to prepare to connect to the terminal device D1. The management device may further notify the gateway to switch the rendering host by using step 714. The gateway may perform step 715 to connect to the rendering host A2. The communication module of rendering host A2 is used to connect to the gateway. Therefore, an indirect connection is established between the terminal device D1 and the rendering host A2.

The management device may perform step 716 to send a connection release notification to the communication module of the rendering host A1, so that the rendering host A1 releases the connection between the rendering host A1 and the gateway.

The communication module of the rendering host A2 may perform step 717 to send a rendering start notification to the rendering engine module of the rendering host A2, to indicate the rendering engine module to start rendering the scene B2. The rendering engine module of the rendering host A2 may perform step 718 in response to the rendering start notification to render the scene B2, and send a rendering result of the scene B2 to the communication module of the rendering host A2 by using step 719. The communication module of the rendering host A2 may send the rendering result to the terminal device D1 by using step 720 and step 721, so that the terminal device D1 displays the rendering result.

There is no time sequence between step 716 and step 717. The step 716 and step 717 may be performed simultaneously, or may be performed successively.

The foregoing example describes the scene switching solution. Next, a computing resource allocation solution is described by using an example.

A computing resource may alternatively be referred to as a hardware resource, and may be referred to as a resource for short.

In some embodiments, the remote rendering system may further include a computing resource management device configured to allocate a computing resource to a rendering host. For example, the computing resource management device may be a cloud host service.

In some embodiments, a computing resource of a rendering host in the remote rendering system is not fixed, and the computing resource management device may allocate a same or different computing resources to different rendering hosts. For example, the rendering host may be a virtual machine, or may be a container.

In this embodiment of this application, the computing resource is a resource used by a computing device (for example, a rendering host) when executing a computing task. A device that has or can use more computing resources has a stronger computing capability. The computing resource may include a quantity and running frequencies of processors, or may include a size of a memory.

Before the rendering host is connected to the terminal device or the gateway, a computing resource needs to be allocated to the rendering host, so that the rendering host uses the computing resource to run a rendering program and perform a related operation. For example, the rendering host invokes a communication module in the rendering program to establish a connection to the gateway (or the terminal device).

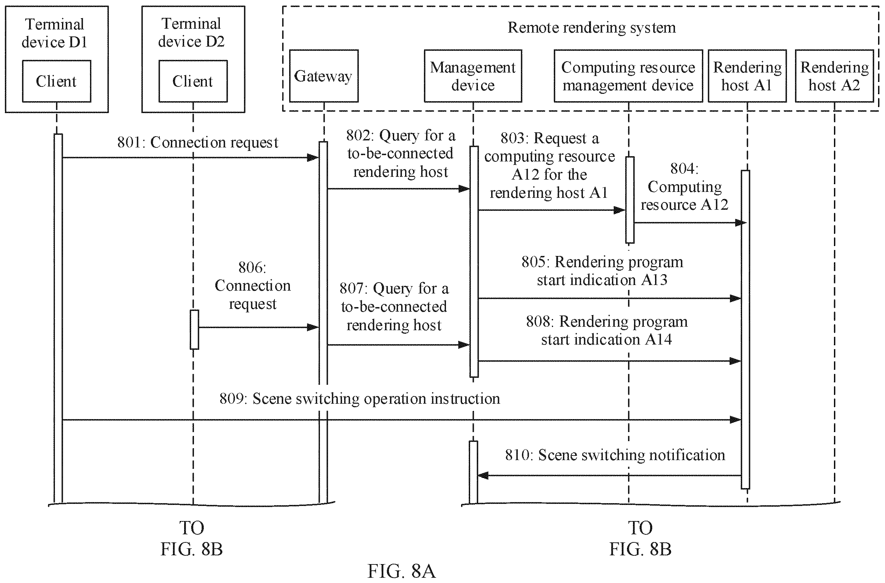

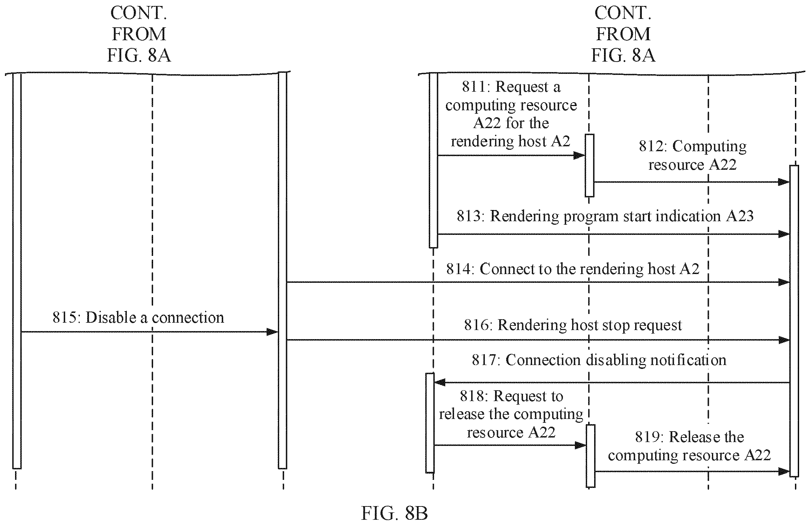

Refer to FIG. 8A and FIG. 8B. The terminal device D1 may perform step 801 to send a connection request to the gateway. The gateway may perform step 802 to query the management device for a to-be-connected rendering host. The to-be-connected rendering host may be set as the rendering host A1. Before the rendering host A1 is connected to the gateway, the management device may perform step 803 to request a computing resource A12 for the rendering host A1. The computing resource management device may respond to the request of the management device, and perform step 804 to allocate the computing resource A12 to the rendering host A1. Therefore, the rendering host A1 may use the computing resource A12.

For example, a size of the computing resource A12 may be determined by the management device. Specifically, the management device may determine the size of the computing resource A12 based on a scene (namely, the scene B1) that the rendering host A1 is responsible for rendering. If the scene B1 is a scene with a high complexity degree, the computing resource A12 is large. If the scene B1 is a scene with a low complexity degree, the computing resource A12 is small.

For example, a size of the computing resource A12 may be determined by the computing resource management device. Specifically, the management device may send, to the computing resource management device, an identifier of a scene (namely, the scene B1) that the rendering host A1 is responsible for rendering. The computing resource management device may determine the size of the computing resource A12 based on the identifier of the scene B1. If the scene B1 is a scene with a high complexity degree, the computing resource A12 is large. If the scene B1 is a scene with a low complexity degree, the computing resource A12 is small.

It should be noted that step 803 and step 804 need to be performed only before the connection between the rendering host and the gateway (or the terminal device D1) is established. For example, the management device may perform step 803 and step 804 when or before deploying the rendering program of the scene B1 to the rendering host A1. For example, the management device may perform step 803 and step 804 before step 802 is performed. In this way, the computing resource may be prepared in advance for the rendering host A1, thereby reducing waiting of a terminal side user.

The management device may further perform step 805 to send a rendering program start indication A13 to the rendering host A1. The rendering program start indication A13 is used to trigger the rendering host A1 to run a rendering program instance A131 of the scene B1, so as to connect to the gateway (or the terminal device D1) by using a communication module of the rendering program instance A131, invoke a rendering engine module of the rendering program instance A131 to render the scene B1 for the terminal device D1, and provide a rendering result of the scene B1 for the terminal device D2.

In some embodiments, as shown in FIG. 8A and FIG. 8B, the terminal device D2 may perform step 806 to send a connection request to the gateway. The gateway may perform step 807 to query the management device for a to-be-connected rendering host. The to-be-connected rendering host may be set as the rendering host A1, that is, the management device further allocates the terminal device D2 to the rendering host A1, and indicates the rendering host A1 to render the scene B1 for the terminal device D2. The management device may further perform step 808 to send a rendering program start indication A14 to the rendering host A1. The rendering program start indication A14 is used to trigger the rendering host A1 to run a rendering program instance A141 of the scene B1, so as to connect to the gateway (or the terminal device D2) by using a communication module of the rendering program instance A141, invoke a rendering engine module of the rendering program instance A141 to render the scene B1 for the terminal device D2, and provide a rendering result of the scene B1 for the terminal device D2.

In an example, the rendering program instance A131 and the rendering program instance A141 are not a same instance. That is, the rendering program instance A131 is a rendering program instance of the scene B1, and the rendering program instance A141 is another rendering program instance of the scene B1.

In an example, the rendering program instance A131 and the rendering program instance A141 are a same instance. The rendering program instance may copy the rendering result of the scene B1, and then send the rendering result of the scene B1 or a copy of the rendering result of the scene B1 to the terminal device D1 and the terminal device D2 respectively.

Still refer to FIG. 8A and FIG. 8B. The terminal device D1 may perform step 809 to send a scene switching operation instruction to the rendering host A1. The rendering host A1 may perform step 810 according to the scene switching operation instruction, to send a scene switching notification to the management device. The management device may determine, based on the scene switching notification, that the rendering host A2 is used to render a scene obtained after switching. For details, refer to the foregoing descriptions of step 607 to step 610 in FIG. 6. The details are not described herein again.

The management device may further perform step 811 to request a computing resource A22 for the rendering host A2. The computing resource management device may perform step 812 to allocate the computing resource A22 to the rendering host A2. For details of step 811 and step 822, refer to the foregoing descriptions of step 803 and step 804.

The rendering host A2 may be set to render the scene B2. The management device may further perform step 813 to send a rendering program start indication A23 to the rendering host A2. The rendering program start indication A23 is used to trigger the rendering host A2 to execute a rendering program instance of the scene B2. After the rendering host A2 runs the rendering program instance of the scene B2, the gateway may perform step 814 to connect to the rendering host A2. A communication module of the rendering program instance run by the rendering host A2 is configured to connect to the gateway. Therefore, the rendering host A2 may send a rendering result of rendering the scene B2 to the terminal device D1.

The terminal device D1 may disable a connection between the terminal device D1 and the gateway by performing step 815. An operation on a side of the terminal device D1 (for example, the terminal device D1 does not run a client anymore, or the terminal device D1 logs out) may trigger the terminal device D1 to disable the connection between the terminal device D1 and the gateway. After the terminal device D1 disables the connection between the terminal device D1 and the gateway, the gateway may perform step 816 to send a rendering host stop request to the rendering host, so as to notify the rendering host A2 that the rendering host A2 may stop running and does not need to render the scene B2 for the terminal device D1.

After receiving the rendering host stop request, the rendering host A2 may perform step 817 to send a session closing notification to the management device. The management device may respond to the session closing notification, to close or release a session resource allocated by the management device to the terminal device D1. For example, the session may be a session resource allocated to the terminal device D1 by the management device when the terminal device D1 logs in to the remote rendering system.

The management device may perform step 818 to request the computing resource management device to release the computing resource A22.

For example, after receiving a connection disabling notification, the management device may wait for preset duration T1 and then perform step 818.

For example, the management device may perform step 818 after finding that the rendering host A2 does not run the rendering program instance. In an example of this example, the management device may perform step 818 after finding that the rendering host A2 does not run the rendering program instance, and a state in which the rendering program instance is not run lasts for preset duration T2.

The computing resource management device may perform step 819 in response to a request of the management device to release the computing resource A22 from the rendering host A2, so that the rendering host A2 no longer uses the computing resource A22.

For example, after the management device performs step 818, the computing resource management device may wait for the preset duration T2. If the rendering host A2 is always in a state in which no rendering program instance is run during waiting, the computing resource management device performs step 819. This avoids costing a long time because the management device repeatedly requests a computing resource for the rendering host A2 when the rendering host A2 continuously has a new connection requirement.

In some embodiments, the management device may adjust, based on load for rendering the scene B1, the computing resource used by the rendering host A1 to render the scene B1. Specifically, in a process of rendering the scene B1 by the rendering host A1, if the load for rendering the scene B1 is high, and consequently a delay of rendering the scene B1 by the rendering host A1 is long or an effect is poor, more computing resources may be allocated to the rendering host A1, so that the rendering host A1 can complete rendering of the scene B1 with high quality and a high speed. In a process of rendering the scene B1 by the rendering host A1, if the rendering host A1 can render the scene B1 when running under low load, a computing resource allocated to the rendering host B1 may be reduced, so as to release a computing resource that is not required by the rendering host A1, thereby reducing a waste of computing resources.

Therefore, computing resource allocation may be performed based on a scene granularity. For example, more computing resources may be allocated to a rendering host responsible for rendering a scene with a high complexity degree, and fewer computing resources may be allocated to a rendering host responsible for rendering a scene with a low complexity degree; or a rendering host with more computing resources is used to render a scene with a high complexity degree, and a rendering host with fewer computing resources is used to render a scene with a low complexity degree. In this way, a waste of resources can be reduced. Further, in a scene rendering process, a computing resource used by a rendering host may be adjusted based on load for rendering a scene, so that a waste of computing resources is further reduced, and the computing resources can be used more appropriately.

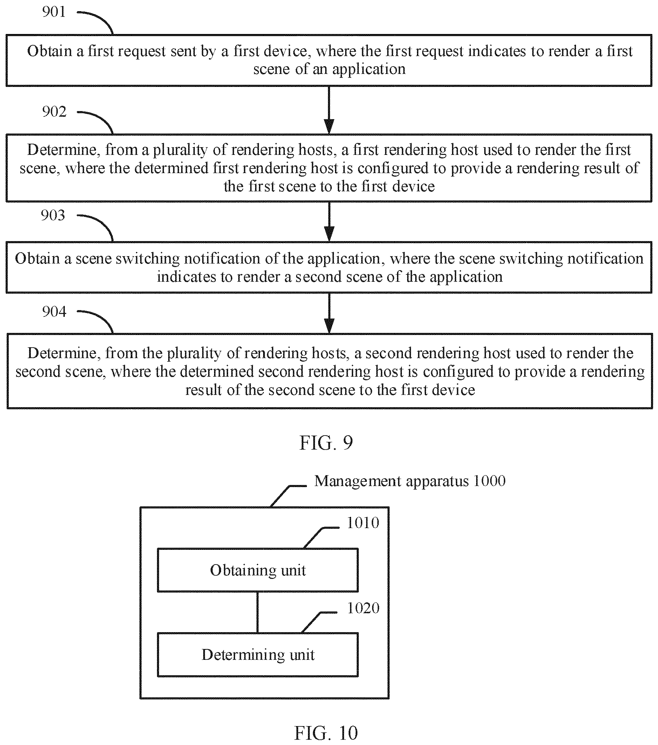

Next, with reference to FIG. 9, a scene rendering method according to an embodiment of this application is described. It may be understood that the method is proposed based on the foregoing scene rendering solution, is another expression manner of the foregoing scene rendering solution, and the two are combined. For a specific implementation of the method, refer to the foregoing description.

As shown in FIG. 9, the method includes the following steps.

Step 901: Obtain a first request sent by a first device, where the first request indicates to render a first scene of an application. For example, for specific implementation of step 901, refer to the foregoing descriptions of step 601 in FIG. 6 or step 701 in FIG. 7A.

Step 902: Determine, from a plurality of rendering hosts, a first rendering host used to render the first scene, where the determined first rendering host is configured to provide a rendering result of the first scene to the first device. For example, for specific implementation of step 902, refer to the foregoing descriptions of step 602 to step 606 in FIG. 6 or step 702 to step 707 in FIG. 7A.

Step 903: Obtain a scene switching notification of the application, where the scene switching notification indicates to render a second scene of the application. For example, for specific implementation of step 903, refer to the foregoing descriptions of step 607 to step 609 in FIG. 6 or step 708 to step 710 in FIG. 7A and FIG. 7B.

Step 904: Determine, from the plurality of rendering hosts, a second rendering host used to render the second scene, where the determined second rendering host is configured to provide a rendering result of the second scene to the first device. For example, for specific implementation of step 904, refer to the foregoing descriptions of step 610 to step 615 in FIG. 6 or step 711 to step 721 in FIG. 7B.

In some embodiments, the method includes: in a process in which the first rendering host renders the first scene, loading, on the second rendering host, a program and data that are required for rendering the second scene. For details, refer to the foregoing descriptions of step 405a and step 405b in FIG. 4, or the foregoing descriptions of step 605 and step 614 in FIG. 6. Details are not described herein again.

In some embodiments, the method further includes: configuring a gateway, where the gateway is configured to: receive, in a local area network, the rendering result of the first scene by the first rendering host, and send the rendering result of the first scene to the first device in an external network. For details, refer to the foregoing descriptions of step 505 to step 508 in FIG. 5, or descriptions of step 606 and step 615 in FIG. 6, or descriptions of step 706, step 707, step 720, and step 721 in FIG. 7A and FIG. 7B. Details are not described herein again.

In some embodiments, the method further includes: connecting the first device to the first rendering host, so that the first rendering host sends the rendering result of the first scene to the first device. Descriptions of step 604 and step 613 in FIG. 6 are not described herein again.

In some embodiments, the scene switching notification is generated when the first rendering host receives a scene switching operation instruction from the first device, and the scene switching operation instruction instructs to render the second scene of the application. For details, refer to the foregoing descriptions of step 607 to step 609. Details are not described herein again.

In some embodiments, the method further includes: obtaining a second request sent by a second device, where the second request indicates to render the first scene of the application; and indicating the first rendering host to provide the rendering result of the first scene to the second device. For details, refer to the foregoing descriptions of step 801 to step 808 in FIG. 8A. The details are not described herein again.

In some embodiments, the method further includes: adjusting, based on load for rendering the first scene, a resource used by the first rendering host to render the first scene. For details, refer to the foregoing description that the management device may adjust, based on the load for rendering the scene B1, the computing resource used by the rendering host A1 to render the scene B1. Details are not described herein again.

In the scene rendering method provided in this embodiment of this application, different rendering hosts may be used to render different scenes of an application, so that a delay caused by scene switching can be reduced, and a performance requirement on the rendering host can be reduced. In addition, in this method, different scenes of an application may be rendered by different rendering hosts, and a rendering host may be selected or a computing resource may be allocated to the rendering host based on a granularity of the scene. For example, more computing resources may be allocated to a rendering host responsible for rendering a scene with a high complexity degree, and fewer computing resources may be allocated to a rendering host responsible for rendering a scene with a low complexity degree; or a rendering host with more computing resources is used to render a scene with a high complexity degree, and a rendering host with fewer computing resources is used to render a scene with a low complexity degree. In this way, a waste of resources can be reduced.

Refer to FIG. 10. An embodiment of this application provides a management apparatus 1000. The management apparatus 1000 may be deployed in the management device described above. As shown in FIG. 10, the management apparatus 1000 may include:
an obtaining unit 1010, configured to obtain a first request sent by a first device, where the first request indicates to render a first scene of an application; and
a determining unit 1020, configured to determine, from a plurality of rendering hosts, a first rendering host used to render the first scene, where the determined first rendering host is configured to provide a rendering result of the first scene to the first device.

The obtaining unit 1010 is further configured to obtain a scene switching notification of the application, where the scene switching notification indicates to render a second scene of the application.

The determining unit 1020 is further configured to determine, from the plurality of rendering hosts, a second rendering host used to render the second scene, where the determined second rendering host is configured to provide a rendering result of the second scene to the first device.

For specific functions of the function units of the management apparatus 1000, refer to the foregoing method embodiment shown in FIG. 9, or refer to the foregoing descriptions of the management device in FIG. 3 to FIG. 8A and FIG. 8B. Details are not described herein again.

The scene rendering apparatus provided in this embodiment of this application may indicate different rendering hosts to render different scenes of an application, so that a delay caused by scene switching can be reduced, and a performance requirement on the rendering host can be reduced. In addition, in this method, different scenes of an application may be rendered by different rendering hosts, and a rendering host may be selected or a computing resource may be allocated to the rendering host based on a granularity of the scene. For example, more computing resources may be allocated to a rendering host responsible for rendering a scene with a high complexity degree, and fewer computing resources may be allocated to a rendering host responsible for rendering a scene with a low complexity degree; or a rendering host with more computing resources is used to render a scene with a high complexity degree, and a rendering host with fewer computing resources is used to render a scene with a low complexity degree. In this way, a waste of resources can be reduced.

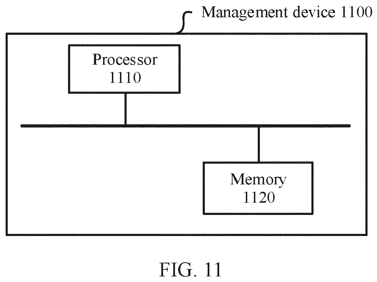

Refer to FIG. 11. An embodiment of this application provides a management device 1100 including a processor 1110 and a memory 1120. The memory 1120 is configured to store computer execution instructions. The processor 1110 is configured to execute the computer instructions stored in the memory 1120, so that the management device 1100 can perform the method embodiments shown in FIG. 9, or perform the operations performed by the management device shown in FIG. 3 to FIG. 8A and FIG. 8B. For example, a first request sent by a first device is obtained, where the first request indicates to render a first scene of an application; a first rendering host used to render the first scene is determined from a plurality of rendering hosts, where the determined first rendering host is configured to provide a rendering result of the first scene to the first device; a scene switching notification of the application is obtained, where the scene switching notification indicates to render a second scene of the application; and a second rendering host used to render the second scene is determined from the plurality of rendering hosts, where the determined second rendering host is configured to provide a rendering result of the second scene to the first device.

In some embodiments, the processor 1110 may be a central processing unit (central processing unit, CPU), or may be another general processor, a digital signal processor (digital signal processor, DSP), an application specific integrated circuit (application specific integrated circuit, ASIC), a field programmable gate array (field programmable gate array, FPGA) or another programmable logic device, a transistor logic device, or a hardware component, or any combination thereof. The general purpose processor may be a microprocessor or any regular processor or the like.

An embodiment of this application provides a remote rendering system. The system may include a management device and a plurality of rendering hosts. The management device may be the management device 1100 and a plurality of rendering hosts shown in FIG. 11, or the management device shown in FIG. 3 to FIG. 8A and FIG. 8B. The plurality of rendering hosts may include the rendering host A1 and the rendering host A2 described above, and the like. A function of the management device and a function of the rendering host are specifically described above, and details are not described herein again.

An embodiment of this application provides an image rendering system including the remote rendering system and the terminal device described above. For specific functions of the terminal device, refer to the foregoing descriptions of the terminal device D1. Details are not described herein again.

In addition, the method steps in embodiments of this application may be implemented in a hardware manner, or may be implemented in a manner of executing software instructions by a processor. The software instructions may include corresponding software modules. The software modules may be stored in a random access memory (random access memory, RAM), a flash memory, a read-only memory (read-only memory, ROM), a programmable ROM (programmable ROM, PROM), an erasable PROM (erasable PROM, EPROM), an electrically EPROM (electrically EPROM, EEPROM), a register, a hard disk, a removable hard disk, a CD-ROM, or a storage medium in any other form well known in the art. For example, a storage medium is coupled to a processor, so that the processor can read information from the storage medium and write information into the storage medium. Certainly, the storage medium may be a component of the processor. The processor and the storage medium may be disposed in an ASIC.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer program instructions are loaded and executed on a computer, the procedure or functions according to embodiments of this application are all or partially generated. The computer may be a general-purpose computer, a dedicated computer, a computer network, or another programmable apparatus. The computer instruction may be stored in a computer-readable storage medium, or may be transmitted by using the computer-readable storage medium. The computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

It may be understood that various numbers in embodiments of this application are merely used for differentiation for ease of description, and are not used to limit the scope of embodiments of this application.

## Claims

1. A scene rendering method, wherein the method comprises:
obtaining a first request sent by a first device, wherein the first request indicates to render a first scene of an application;
determining, from a plurality of rendering hosts, a first rendering host used to render the first scene, wherein the determined first rendering host is configured to provide a rendering result of the first scene to the first device;
obtaining a scene switching notification of the application, wherein the scene switching notification indicates to render a second scene of the application; and
determining, from the plurality of rendering hosts, a second rendering host used to render the second scene, wherein the determined second rendering host is configured to provide a rendering result of the second scene to the first device.

2. The method according to claim 1, wherein the method comprises:
in a process in which the first rendering host renders the first scene, loading, on the second rendering host, a program and data that are required for rendering the second scene.

3. The method according to claim 1 or 2, wherein the method comprises:
configuring a gateway, wherein the gateway is configured to: receive, in a local area network, the rendering result of the first scene by the first rendering host, and send the rendering result of the first scene to the first device in an external network.

4. The method according to claim 1 or 2, wherein the method further comprises: connecting the first device to the first rendering host, so that the first rendering host sends the rendering result of the first scene to the first device.

5. The method according to any one of claims 1 to 4, wherein the scene switching notification is generated when the first rendering host receives a scene switching operation instruction from the first device, and the scene switching operation instruction instructs to render the second scene of the application.

6. The method according to any one of claims 1 to 5, wherein the method further comprises:
obtaining a second request sent by a second device, wherein the second request indicates to render the first scene of the application; and
indicating the first rendering host to provide the rendering result of the first scene to the second device.

7. The method according to any one of claims 1 to 6, wherein the method further comprises:
adjusting, based on load for rendering the first scene, a resource used by the first rendering host to render the first scene.

8. A management apparatus, wherein the management apparatus comprises:
an obtaining unit, configured to obtain a first request sent by a first device, wherein the first request indicates to render a first scene of an application; and
a determining unit, configured to determine, from a plurality of rendering hosts, a first rendering host used to render the first scene, wherein the determined first rendering host is configured to provide a rendering result of the first scene to the first device, wherein
the obtaining unit is further configured to obtain a scene switching notification of the application, wherein the scene switching notification indicates to render a second scene of the application; and
the determining unit is further configured to determine, from the plurality of rendering hosts, a second rendering host used to render the second scene, wherein the determined second rendering host is configured to provide a rendering result of the second scene to the first device.

9. The management apparatus according to claim 8, wherein the management apparatus further comprises:
a loading unit, configured to: in a process in which the first rendering host renders the first scene, load, on the second rendering host, a program and data that are required for rendering the second scene.

10. The management apparatus according to claim 8 or 9, wherein the management apparatus further comprises:
a configuration unit, configured to configure a gateway, wherein the gateway is configured to: receive, in a local area network, the rendering result of the first scene by the first rendering host, and send the rendering result of the first scene to the first device in an external network.

11. The management apparatus according to claim 8 or 9, wherein the management apparatus further comprises:
a connection unit, configured to connect the first device to the first rendering host, so that the first rendering host sends the rendering result of the first scene to the first device.

12. The management apparatus according to any one of claims 8 to 11, wherein the scene switching notification is generated when the first rendering host receives a scene switching operation instruction from the first device, and the scene switching operation instruction instructs to render the second scene of the application.

13. The management apparatus according to any one of claims 8 to 12, wherein the management apparatus further comprises an indication unit, wherein
the obtaining unit is further configured to obtain a second request sent by a second device, wherein the second request indicates to render the first scene of the application; and
the indication unit is configured to indicate the first rendering host to provide the rendering result of the first scene to the second device.

14. The management apparatus according to any one of claims 8 to 13, wherein the management apparatus further comprises:
an adjustment unit, configured to adjust, based on load for rendering the first scene, a resource used by the first rendering host to render the first scene.

15. A remote scene rendering system, wherein the system comprises a management device and a plurality of rendering hosts, and the management device is configured to perform the following operations:
obtaining a first request sent by a first device, wherein the first request indicates to render a first scene of an application;
determining, from the plurality of rendering hosts, a first rendering host used to render the first scene, wherein the determined first rendering host is configured to provide a rendering result of the first scene to the first device;
obtaining a scene switching notification of the application, wherein the scene switching notification indicates to render a second scene of the application; and
determining, from the plurality of rendering hosts, a second rendering host used to render the second scene, wherein the determined second rendering host is configured to provide a rendering result of the second scene to the first device.

16. The system according to claim 15, wherein the management apparatus is further configured to perform the following operations:
in a process in which the first rendering host renders the first scene, loading, on the second rendering host, a program and data that are required for rendering the second scene.

17. The system according to claim 15 or 16, wherein the management apparatus is further configured to perform the following operations:
configuring a gateway, wherein the gateway is configured to: receive, in a local area network, the rendering result of the first scene by the first rendering host, and send the rendering result of the first scene to the first device in an external network.

18. The system according to claim 15 or 18, wherein the management apparatus is further configured to perform the following operations:
connecting the first device to the first rendering host, so that the first rendering host sends the rendering result of the first scene to the first device.

19. The system according to any one of claims 15 to 18, wherein the scene switching notification is generated when the first rendering host receives a scene switching operation instruction from the first device, and the scene switching operation instruction instructs to render the second scene of the application.

20. The system according to any one of claims 15 to 19, wherein the management apparatus is further configured to perform the following operations:
obtaining a second request sent by a second device, wherein the second request indicates to render the first scene of the application; and
indicating the first rendering host to provide the rendering result of the first scene to the second device.

21. The system according to any one of claims 15 to 20, wherein the management apparatus is further configured to perform the following operations:
adjusting, based on load for rendering the first scene, a resource used by the first rendering host to render the first scene.

22. An image rendering system, comprising the system according to any one of claims 15 to 21 and a first device.

23. A computer-readable storage medium, comprising computer program instructions, wherein when the computer program instructions are executed by a computing device cluster, the computing device cluster performs the method according to any one of claims 1 to 7.

24. A computer program product comprising instructions, wherein when the instructions are run by a computing device cluster, the computing device cluster is enabled to perform the method according to any one of claims 1 to 7.

25. A management device, wherein the management device comprises:
a memory; and
a processor, configured to execute instructions in the memory, so that the management device performs the method according to any one of claims 1 to 7.
